# EUROPÄISCHE PATENTSCHRIFT

(11) **EP 2 795 401 B1**
(45) Veröffentlichungstag und Bekanntmachung des Hinweises auf die Patenterteilung: **06.06.2018**
(21) Anmeldenummer: 12824687.3
(22) Anmeldetag: 21.12.2012
(51) Int. Cl.: G03B 21/54, A63J 25/00, E04H 3/26, A63G 31/16

(54) **FILMVORFÜHRVORRICHTUNG UND VERFAHREN ZUM VORFÜHREN EINES FILMS**
MOTION PICTURE PRESENTATION DEVICE AND METHOD FOR PRESENTING A MOTION PICTURE
DISPOSITIF DE PROJECTION DE FILM ET PROCÉDÉ DE PROJECTION D'UN FILM

(30) Priorität: 23.12.2011 DE 102011122229
(43) Veröffentlichungstag der Anmeldung: 29.10.2014
(73) Patentinhaber: Simtec Systems GmbH, 38108 Braunschweig (DE)
(72) Erfinder: KAUFMANN, Bernd, 38104 Braunschweig (DE)
(74) Vertreter: Plöger, Jan Manfred
(86) Internationale Anmeldenummer: PCT/EP2012/005328
(87) Internationale Veröffentlichungsnummer: WO 2013/091886

(56) Entgegenhaltungen:
- WO-A1-95/33539
- WO-A1-2010/054413
- WO-A2-2007/057171
- CN-A- 101 025 051
- CN-A- 101 912 689
- US-A- 5 975 907
- US-B1- 6 354 954

## Beschreibung

Die Erfindung betrifft eine Filmvorführvorrichtung mit nach dem Oberbegriff von Anspruch 1.

Eine derartige Filmvorführvorrichtung ist in Form eines Kinos bekannt, bei der die Sitze schwenkbar an einem Bodenelement befestigt sind. Beim Vorführen des Films wird das Bodenelement so gekippt, dass die auf den Sitzen sitzenden Zuschauer einen freien Blick auf die Projektionsvorrichtung haben. Nachteilig an der bekannten Filmvorführvorrichtung ist, dass die Bewegungsmöglichkeit der Sitze eingeschränkt ist. Insbesondere können Bewegungen nicht in allen Freiheitsgraden durchgeführt werden, was realistische Simulationen einer Vielzahl von Bewegungszuständen erschwert und unmöglich macht.

Bekannt sind zudem Simulatoren, beispielsweise Flugsimulatoren, bei denen für eine geringe Anzahl an Personen eine virtuelle Umgebung realistisch simuliert werden kann. Derartige Simulatoren sind für eine Vielzahl an Personen nicht geeignet, da das dazu führt, dass die Personen hintereinander angeordnet werden müssen. Das aber gibt jedem einzelnen Zuschauer einen optischen Bezugspunkt zu dem Koordinatensystem, in dem sein Sitz angeordnet ist, was die Simulation von Bewegungszuständen erschwert.

Aus der US 5,975,907 A ist ein Bewegungssimulator bekannt, bei dem ein Hexapodantrieb auf einer in zwei Punkten gelagerten Wiege befestigt ist. Mittels der Wiege können Stampfbewegungen eines Schiffes besonders gut simuliert werden, so dass sich dieser Simulator vorzugsweise für Schiffssimulationen eignet. Nachteilig an einem derartigen System ist, dass es nur schlecht für große Zuschauerzahlen in einem Großleinwandkino geeignet ist.

Aus der WO 2007/057171 A2 ist eine Besuchertribüne für eine Kinoprojektion bekannt, bei der die Zuschauersitze um eine horizontale Schwenkachse verschwenkbar sind. Dieser Aufbau ist mangels eines Hexapodantriebs nur zu einer eingeschränkten Zahl an Bewegungen in der Lage.

Aus der US 6,354,954 B1 ist ein Kino bekannt, bei dem die Zuschauer an einem verschwenkbaren Schlitten hängen. Die Zuschauer sind so angeordnet, dass sie einander während der Filmvorstellung nicht sehen können.

Aus der CN 101 912 689 A ist ein Kino bekannt, bei dem Sitze um eine Drehachse gedreht werden können, die in guter Näherung in Sichtrichtung liegt. Auch dieses System erlaubt nur eingeschränkte Bewegungen der Zuschauersitze.

Aus der WO 95 33539 A1 ist ein Hexapodantrieb bekannt.

Die CN 101 025 051 A beschreibt ein Kino, bei dem die Zuschauertribüne verschwenkbar ist. Ein ähnliches System ist aus der WO 20101054413 A1 bekannt.

Der Erfindung liegt die Aufgabe zugrunde, eine Filmvorführvorrichtung anzugeben, die es ermöglicht, für eine Vielzahl an Zuschauern eine realistische Simulation zu erzielen.

Die Erfindung löst das Problem mittels einer Filmvorführvorrichtung gemäß Anspruch 1.

Gemäß einem weiteren Aspekt löst die Erfindung das Problem durch ein Verfahren gemäß Anspruch 12.

Vorteilhaft an der Erfindung ist, dass jeder Zuschauer eine Bewegung in Verfahren gemäß Anspruch 11.

Vorteilhaft an der Erfindung ist, dass jeder Zuschauer eine Bewegung in sechs Freiheitsgraden erfahren kann, was ein deutlich realistischeres Empfinden ermöglicht.

Ein weiterer Vorteil ist, dass die Sitze mittels der Schwinge in eine Arbeitsstellung geschwenkt werden können, die einen hinreichenden Abstand von Zuwegungen aufweist, so dass die Sitze in einem großen Bewegungsbereich bewegt werden können. Dieser große Bewegungsbereich ist möglich, ohne dass die Antriebe des Hexapodantriebs einen übermäßig großen Hub besitzen müssten. Es ist nämlich ein Nachteil, einen Hexapodantrieb mit großen Hüben vorzusehen, da derartige Hexapodantriebe sehr aufwendig in der Fertigung sind.

Vorteilhaft ist zudem der einfache Aufbau der Filmvorführvorrichtung. So ermöglicht es die einfach aufgebaute Schwinge, einen Standard-Hexapodantrieb zu verwenden, um alle Sitze kollektiv und mit großen Hüben bewegen zu können.

Im Rahmen der vorliegenden Beschreibung wird unter der Projektionsfläche insbesondere eine ebene oder gekrümmte Fläche verstanden, die hell, beispielsweise weiß, ist, so dass der Film auf die Projektionsfläche projiziert werden kann.

Unter dem Projektor wird insbesondere eine Vorrichtung verstanden, mittels der eine rasche Folge von zumindest 15 zueinander verschiedenen Bildern pro Sekunde (Laufbild) auf die Projektionsfläche projizierbar ist. Es ist möglich, dass der Projektor aus mehreren Einzelprojektoren aufgebaut ist, die unterschiedliche Bereiche der Projektionsfläche beleuchten. Derartige Projektoren, die aus mehreren Einzelprojektoren aufgebaut sind, werden in 3D-Kinos standardmäßig eingesetzt.

Unter dem Film wird eine Folge von Bildern verstanden, die entweder fest vorgegeben sind, wie in einem klassischen Kinofilm, oder aber interaktiv berechnet werden. So kann die Filmvorführvorrichtung ein Flugsimulator sein. Vorzugsweise besitzt die Filmvorführvorrichtung eine Rechnereinheit, die mit einer Steuervorrichtung gekoppelt ist. Wird die Steuervorrichtung betätigt, so errechnet die Rechenvorrichtung die Reaktion, die ein Flugzeug auf eine entsprechende Betätigung einer Steuervorrichtung zeigen würde und berechnet zudem Bilder, die von dem Projektor auf die Projektionsfläche projiziert werden, sowie Steuersignale für die Bewegungsvorrichtung. Die Zuschauer auf den Sitzen haben dann das Gefühl, sie würden in einem Flugzeug sitzen, das mit der Steuervorrichtung gesteuert wird. Statt der Simulation eines Flugzeugs kann auch jedes beliebige andere Flugzeug simuliert werden, beispielsweise Flugkörper wie Hubschrauber, Tragschrauber, Raketen oder Fahrzeuge, wie beispielsweise ein virtuelles Fahrzeug auf einer virtuellen Fahrbahn oder Schiffe.

Unter dem Merkmal, dass die Sitze kollektiv in zumindest drei Freiheitsgraden bewegbar sind, wird insbesondere verstanden, dass die Sitze bezüglich zumindest dreier Freiheitsgrade relativ zueinander gekoppelt sind. Beispielsweise sind die Sitze bezüglich der drei Translationsfreiheitsgrade miteinander gekoppelt. Das ist insbesondere dann der Fall, wenn alle Sitze an einem Bodenelement befestigt sind. Wird dieses Bodenelement in eine Raumrichtung translatorisch bewegt, so bewegen sich alle Sitze um den gleichen Betrag in die gleiche Richtung.

Günstig ist es, wenn die Sitze um zumindest eine Sitz-Schwenkachse schwenkbar gelagert sind. Günstig ist es zudem, wenn die Schwinge um zumindest eine Schwingen-Schwenkachse schwenkbar gelagert ist. Besonders vorteilhaft ist es dann, wenn die zumindest eine Sitz-Schwenkachse zumindest im Wesentlichen parallel zur zumindest einen Schwingen-Schwenkachse verläuft.

Unter dem Merkmal, dass die Schwenkachsen im Wesentlichen parallel zueinander verlaufen, ist zu verstehen, dass es zwar möglich ist, dass die Schwenkachsen parallel zueinander verlaufen, dass aber auch möglich ist, dass beide Schwenkachsen einen Winkel miteinander einschließen, der beispielsweise kleiner ist als 10°. Das hat den Vorteil, dass die Schwinge betätigt werden kann und die Sitze eine Gegenbewegung ausführen können, die dazu führt, dass der Sitz keine Drehbeschleunigung erfährt.

Gemäß der Erfindung besitzt die Filmvorführvorrichtung einen Zugang, auf dem Zuschauer zu den Sitzen gehen können, wobei die Bewegungsvorrichtung ein Bodenelement aufweist, an dem die Sitze schwenkbar befestigt sind. Es ergibt sich so eine besonders einfache Konstruktion.

Vorteilhaft ist es, wenn die Bewegungsvorrichtung durch Betätigen der Schwenkvorrichtung in eine erste Lage, in der das Bodenelement an den Zugang angedockt ist, und in eine zweite Lage, in der das Bodenelement gegenüber seiner ersten Lage um einen Schwenkwinkel von zumindest 15 Grad verschwenkt ist, bringbar ist. Besonders günstig ist es, wenn das Bodenelement in der zweiten Lage einen größeren Abstand vom Zugang aufweist, als in der ersten Lage. Ausgehend von dieser Lage kann dann eine Vielzahl von Bewegungen mit dem Hexapodantrieb durchgeführt werden. Die erste Lage kann als Ruhelage bezeichnet werden, die einen Zuschauerwechsel erlaubt. Die zweite Lage kann als Arbeitslage bezeichnet werden, in der die Zuschauer den Film ansehen und bewegt werden.

Vorzugsweise sind die Sitze so am Bodenelement angeordnet, dass dann, wenn die Bewegungsvorrichtung in der ersten Lage ist, für zumindest ein Drittel der auf den Sitzen sitzenden Personen zumindest ein Sitz in einem Blickfeld ist, über höchstens ein Zehntel der auf den Sitzen sitzenden Personen, wenn die Bewegungsvorrichtung in der zweiten Lage ist. Unter dem Blickfeld wird insbesondere das binokulare menschliche Blickfeld verstanden, das horizontal +/- 10° Ausdehnung hat, vertikal positiv nach oben + 25° und negativ nach unten - 35°. Das Blickfeld, das als Fokussierfeld bezeichnet werden könnte, bezeichnet diejenigen Bereiche, die alle mit dem Auge nacheinander zentral fixierbaren Sehobjekte im Außenraum mithalten. Wenn in der zweiten Lage für höchstens ein Zehntel der auf den Sitzen sitzenden Personen, insbesondere für kleine Personen, ein anderer Sitz im Blickfeld liegt, hat die Person den Eindruck, vollkommen allein im Raum zu sein, was ein besonders intensives Erleben ermöglicht.

Es ist vorteilhaft, wenn das Bodenelement mittels der Schwinge um zumindest 25°, insbesondere um zumindest 30°, schwenkbar ist. Vorzugsweise ist das Bodenelement mittels des Hexapodantriebs bezüglich einer Schwenkbewegung um die Schwingen-Schwenkachse um zumindest 25°, insbesondere um zumindest 30°, schwenkbar. Günstig ist zudem, wenn das Bodenelement mittels der Schwinge und des Hexapodantriebs gemeinsam um zumindest 60°, insbesondere um zumindest 70°, verschwenkbar ist. Als besonders günstig haben sich 75° herausgestellt.

Gemäß einer bevorzugten Ausführungsform besitzt der Hexapodantrieb zumindest sechs Linearantriebe, wobei jeder der Linearantriebe eine Minimallängenstellung, eine Maximallängenstellung und einen Hub hat, wobei zumindest ein Linearantrieb dann, wenn die Bewegungsvorrichtung in der ersten Lage ist, zumindest 75 % seines Hubs aus der Minimallängenstellung zurückgelegt hat. Unter einem Linearantrieb wird insbesondere ein Antrieb verstanden, der eine Druckkraft und eine Zugkraft aufbringen kann. Der Linearantrieb kann auch ein Teleskopantrieb sein und einstufig, zweistufig oder mehrstufig ausgebildet sein. Insbesondere umfasst der Linearantrieb einen Hydraulikzylinder.

Um einen möglichst großen Winkel zwischen der ersten Lage und der zweiten Lage zu erreichen, ist es vorteilhaft, wenn der Hexapodantrieb dann, wenn die Bewegungsvorrichtung in der ersten Lage ist, eine extreme Stellung annimmt oder sich in einer Umgebung einer extremen Stellung befindet. Das wiederum bedeutet, dass zumindest ein Linearantrieb dicht bei seiner Maximallängenstellung ist. Die Maximallängenstellung bezeichnet die Stellung des Linearantriebs, in der er seine maximale Länge hat. Entsprechend bezeichnet die Minimallängenstellung die Stellung des Linearantriebs, in der er seine minimale Länge hat. Der Hub ist die Längedifferenz zwischen der Länge bei Maximallängenstellung und der Länge bei Minimallängenstellung.

Vorzugsweise besitzt eine Mehrzahl der Sitze Haltevorrichtungen, mittels denen eine Person relativ zum Sitz fixierbar ist. Es kann sich hierbei um Haltebügel handeln, alternativ oder zusätzlich kann die Haltevorrichtung Anschnallgurte aufweisen. Die Haltevorrichtung kann notwendig sein, um zu verhindern, dass Personen aus dem Sitz fallen und sich verletzen.

Gemäß einer bevorzugten Ausführungsform ist die Projektionsfläche gekrümmt und die Mehrzahl an Sitzen ist innerhalb einer gedachten Ausgleichskugel durch die Projektionsfläche angeordnet. Unter der Ausgleichskugel wird insbesondere die mathematisch definierte Ausgleichskugel verstanden, d.h. diejenige Kugel, für die das Integral über die Abweichungen zwischen der gedachten Kugel und der Projektionsfläche minimal wird.

Günstig ist es, wenn die Sitze automatisch relativ zu dem Bodenelement verschwenkbar sind. In anderen Worten ist insbesondere je zumindest ein Schwenkantrieb vorhanden, mittels dem die Sitze automatisch verschwenkbar sind. Das hat den Vorteil, dass Schwenkbewegungen des Bodenelements bei Bedarf ausgeglichen werden können. Es ist möglich, nicht aber notwendig, dass jeder Sitz seinen eigenen Schwenkantrieb besitzt. Es ist vielmehr auch möglich, dass zwei oder mehr Sitze von dem gleichen Schwenkantrieb angetrieben sind.

Gemäß einer bevorzugten Ausführungsform besitzt die Filmvorführvorrichtung eine Ansteuereinheit, die eingerichtet ist zum automatischen Durchführen eines Verfahrens mit den Schritten (i) Erfassen, ob für alle durch eine Person belegten Sitze ein Freigabesignal zum Schwenken der Schwinge vorliegt, das den Zustand kodiert, dass die auf dem Sitz befindliche Person relativ zum Sitz fixiert ist, (ii) nach Vorliegen des Freigabesignals Schwenken der Schwinge, so dass die Bewegungsvorrichtung in die zweite Lage kommt, (iii) Führen des Films und dazu synchronisiertes Bewegen der Sitze der Zuschauer, insbesondere durch Bewegen eines Bodenelements (30), auf dem die Sitze befestigt sind, mittels der Bewegungsvorrichtung.

Vorzugsweise ist die Ansteuereinheit eingerichtet zum automatischen Durchführen eines Verfahrens mit den zusätzlichen Schritten eines Schwenkens der Schwinge, so dass die Bewegungsvorrichtung in die erste Lage kommt, und eines Lösens der Haltevorrichtungen.

Gemäß einer bevorzugten Ausführungsform ist die Schwinge in einer kinematischen Kette mit dem Hexapodantrieb angeordnet. Das heißt, dass entweder der Hexapodantrieb sich als Ganzes bewegt, wenn die Schwinge bewegt wird oder dass die Schwinge sich bewegt, wenn der Hexapodantrieb bewegt wird. Alternativ kann die Schwinge auch so ausgebildet sein, dass die Fußpunkte von ein, zwei oder drei Linearantrieben an der Schwinge befestigt sind, wobei die Fußpunkte der verbleibenden Linearantriebe nicht mittels der Schwinge bewegbar sind, sondern beispielsweise an einem Gebäude befestigt sind. In anderen Worten ist der Hexapodantrieb in Teilen mittels der Schwinge bewegbar.

Gemäß einer bevorzugten Ausführungsform ist jeder der Hydraulikzylinder in jeweils einem Fußpunkt mit der Schwinge verbunden, wobei die Schwinge in ein Drehgelenk gelagert ist, das eine Drehachse besitzt. Die Fußpunkte sind so angeordnet, dass dann, wenn die Bewegungsvorrichtung in der ersten Lage ist, zumindest zwei der Fußpunkte in einem ersten Halbraum liegen, der von einer vertikalen Ebene durch die Drehachse begrenzt wird, wobei zumindest zwei der Fußpunkte außerhalb dieses ersten Halbraumes liegen. In diesem Fall bewegen sich beispielsweise vier, drei oder zwei der Fußpunkte nach unten, wenn sich die übrigen Fußpunkte nach oben bewegen. Auf diese Weise bleibt das Drehmoment, das zum Drehen der Schwinge notwendig ist, vergleichsweise gering.

Günstig ist, wenn die Bewegungsvorrichtung so ausgebildet ist, dass dann, wenn sie in ihrer ersten Lage ist, das Bodenelement mit der Horizontalen einen Winkel von weniger als 15° einschließt. In diesem Zustand lässt sich das Bodenelement besonders leicht begehen.

Günstig ist es zudem, wenn die Schwingen in dieser Situation mit der Horizontalen einen Winkel von weniger als 22,5° einschließt. Es hat sich gezeigt, dass der Hexapodantrieb dann besonders einfach aufgebaut werden kann, da er nur relativ kurzhubige Zylinder benötigt.

Besonders günstig ist es, wenn das Bodenelement mit der Schwinge einen Winkel von weniger als 20° einschließt, wenn die Bewegungsvorrichtung in der ersten Lage ist. In diesem Fall ist die Bewegung aus der ersten Lage in die zweite Lage für die auf den Sitzen befindlichen Personen mit einer als besonders intensiv empfundenen Bewegung verbunden.

Im Folgenden wird die Erfindung anhand der beigefügten Zeichnungen näher erläutert. Dabei zeigt
- Figur 1: eine Seitenansicht einer erfindungsgemäßen Filmvorführvorrichtung, wenn die Bewegungsvorrichtung in der ersten Lage ist,
- Figur 2: die Filmvorführvorrichtung gemäß Figur 1 in dem Zustand, in dem die Bewegungsvorrichtung in der zweiten Lage ist, und
- Figur 3: eine perspektivische Ansicht auf die Filmvorführvorrichtung gemäß der Figuren 1 und 2.
- Figur 4: zeigt eine dreidimensionale Ansicht einer erfindungsgemäßen Filmvorführvorrichtung gemäß einer zweiten Ausführungsform, wobei die Bewegungsvorrichtung in ihrer ersten Lage gezeigt ist und
- Figur 5: zeigt die Filmvorführvorrichtung gemäß Figur 2 in dem Zustand, in dem die Bewegungsvorrichtung in der zweiten Lage ist.

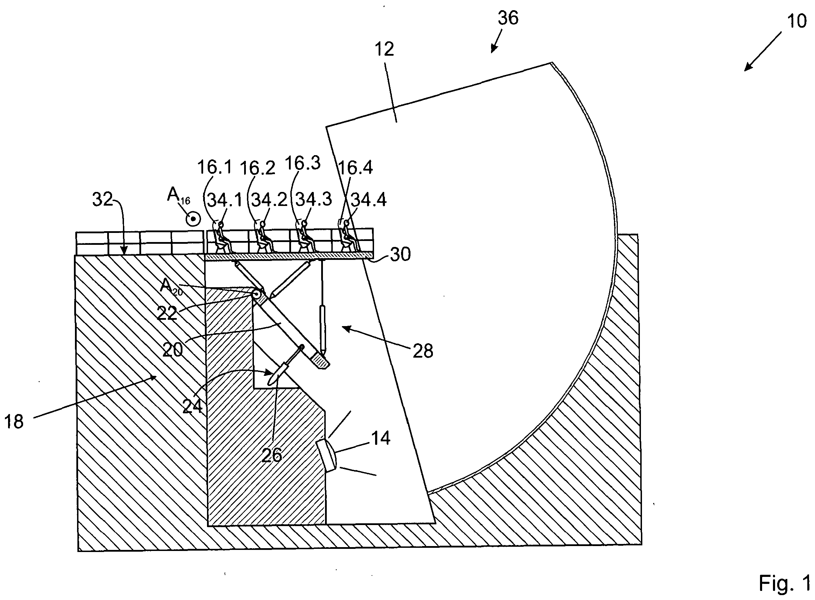

Figur 1 zeigt eine erfindungsgemäße Filmvorführvorrichtung 10, die eine gekrümmte Projektionsfläche 12, einen schematisch eingezeichneten Projektor 14 zum Projizieren eines Films auf die Projektionsfläche 12 und eine Mehrzahl an Sitzen 16.1, 16.2,... für Zuschauer umfasst. Die Filmvorführvorrichtung 10 besitzt zudem eine Bewegungsvorrichtung 18, mittels der die Sitze 16 (Bezugszeichen ohne Zählsuffix bezeichnen das Objekt als solches) kollektiv in sechs Freiheitsgraden bewegt werden kann, nämlich in drei Translationsfreiheitsgraden und drei Drehfreiheitsgraden.

Die Bewegungsvorrichtung 18 umfasst eine Schwinge 20, die in einem Drehgelenk 22 schwenkbar gelagert ist. Mittels einer Schwenkvorrichtung 24, die im vorliegenden Fall einen Hydraulikzylinder 26 aufweist, ist die Schwinge 20 automatisch schwenkbar ist. Die Bewegungsvorrichtung 18 besitzt zudem einen Hexapodantrieb 28, der an der Schwinge 20 montiert ist. In anderen Worten bewegt sie sich, wenn die Schwinge 20 bewegt wird.

Die Schwinge 20 ist mit dem Hexapodantrieb 28 in einer kinematischen Kette angeordnet. Das heißt, dass der Hexapodantrieb 28 sich als Ganzes bewegt, wenn die Schwinge 20 bewegt wird oder dass die Schwinge 20 sich bewegt, wenn der Hexapodantrieb 28 bewegt wird.

Die Bewegungsvorrichtung 18 umfasst ein Bodenelement 30, das mittels des Hexapodantriebs 28 und der Schwinge 20 bewegbar ist. Im vorliegenden Fall ist das Bodenelement 30 mit dem Hexapodantrieb 28 verbunden und die Sitze 16 sind am Bodenelement 30 schwenkbar befestigt. Die Sitz-Schwenkachsen A₁₆ ragen im vorliegenden Fall senkrecht aus der Zeichnungsebene heraus. Die Sitz-Schwenkachsen A₁₆ verlaufen parallel zu einer Schwingen-Schwenkachse A₂₀, um die die Schwinge 20 schwenkbar gelagert ist. Die Schwinge 20, die Schwenkvorrichtung 24, der Hexapodantrieb 28, die Sitze 16 und das Bodenelement 30 sind Teil eines Zuschauermoduls.

Die Filmvorführvorrichtung 10 besitzt einen Zugang 32, beispielsweise in Form eines bodenfesten Wegs, auf dem Zuschauer 34.1, 34.2, ... zu ihren Sitzen 16 gelangen können. Figur 1 zeigt den Fall, dass das Bodenelement 30 an den Zugang 32 angedockt ist. Der Zugang 32 ist im vorliegenden Fall in einem Unterhaltungsgebäude 36 ausgebildet, das auch die Filmvorführvorrichtung 10 umfasst.

Figur 1 zeigt die Filmvorführvorrichtung 10, wenn das Bodenelement 30 in einer ersten Lage ist, in der es an den Zugang 32 angedockt ist. Im vorliegenden Fall verläuft das Bodenelement 30 in der ersten Lage horizontal. Es ist auch möglich, dass das Bodenelement 30 eine Neigung in der ersten Lage aufweist.

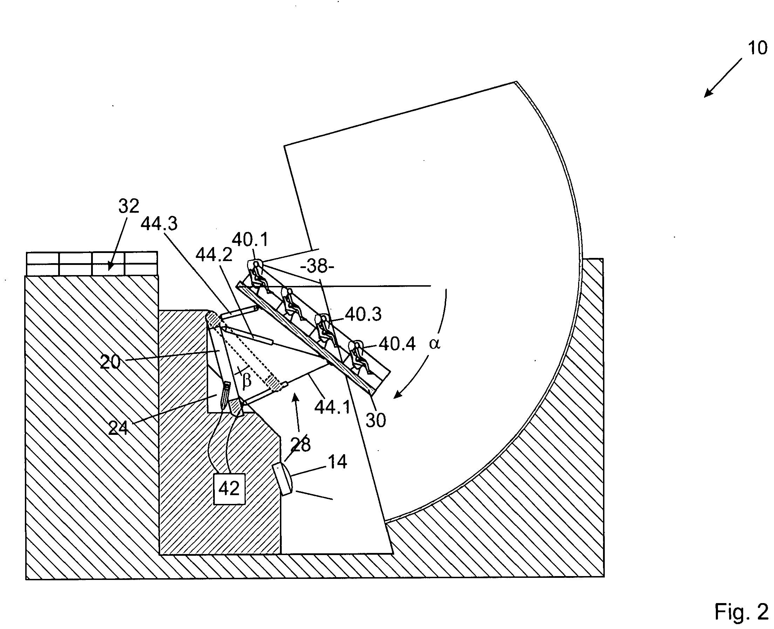

Figur 2 zeigt die Filmvorführvorrichtung 10 in dem Zustand, in dem das Bodenelement 30 in einer zweiten Lage ist, in der das Bodenelement 30 gegenüber seiner ersten Lage (vergleiche Figur 1) um einen Schwenkwinkel α von im vorliegenden Fall 30° geneigt ist. Günstig ist ein Schwenkwinkel von zumindest 60°, insbesondere von zumindest 70°, beispielsweise 75°. In diesem Zustand hat das Bodenelement 30 keinen Kontakt mehr mit dem Zugang 32, sondern ist von diesem beabstandet. Es ist zu erkennen, dass der Hexapodantrieb 28 in der gleichen Stellung relativ zur Schwinge geblieben ist, wohingegen die Schwenkvorrichtung 24 die Schwinge 20 um einen Schwingen-Schwenkwinkel β verschwenkt hat. Im vorliegenden Fall ist der Schwingen-Schwenkwinkel β gleich dem Schwenkwinkel α. Beispielsweise beträgt der Schwingen-Schwenkwinkel β = 35°.

In der zweiten Lage hat das Bodenelement 30 eine solche Position, dass für die auf den Sitzen 16 sitzenden Personen 34 ein Blickfeld 38 keinen weiteren Sitz 16 enthält.

Figur 2 zeigt zudem schematisch, dass die Sitze 16 jeweils eine Haltevorrichtung 40 aufweisen, mittels der die jeweilige Person 34 relativ zu ihrem Sitz 16 fixierbar ist. Im vorliegenden Fall ist die Haltevorrichtung 40 durch einen Haltebügel gebildet.

Der Hexapodantrieb 28 besitzt sechs Linearantriebe 44.1, 44.2, ..., von denen in Figur 2 lediglich die Linearantriebe 44.1, 44.2, 44.3 gezeigt sind. Die drei übrigen Linearantriebe 44 sind verdeckt. Jeder Linearantrieb 44 besitzt eine Minimallängenstellung und eine Maximallängenstellung. In Figur 2 ist der Linearantrieb 44.1 dicht bei seiner maximalen Längenstellung, das heißt, dass ein weiteres Ausfahren um mehr als 15 % des Hubs nicht möglich ist. Der Linearantrieb 44.3 hingegen ist in seiner minimalen Längenstellung, ein weiteres Einfahren ist nicht möglich. In der in Figur 2 gezeigten Position kann das Bodenelement 30 durch Längenveränderung der Linearantriebe 44 in sechs Freiheitsgraden bewegt werden.

Die Filmvorführvorrichtung 10 umfasst eine Ansteuereinheit 42, die mit der Schwenkvorrichtung 24 sowie den Linearantrieben 44 und ggf. dem Projektor 14 verbunden ist. Die Ansteuereinheit 42 umfasst vorzugsweise einen digitalen Speicher, in dem ein Programm gespeichert ist, in das ein vorgegebener Bewegungsablauf für das Bodenelement 30 und dazu synchronisiert ein vom Projektor 14 zu zeigender Film abgelegt ist.

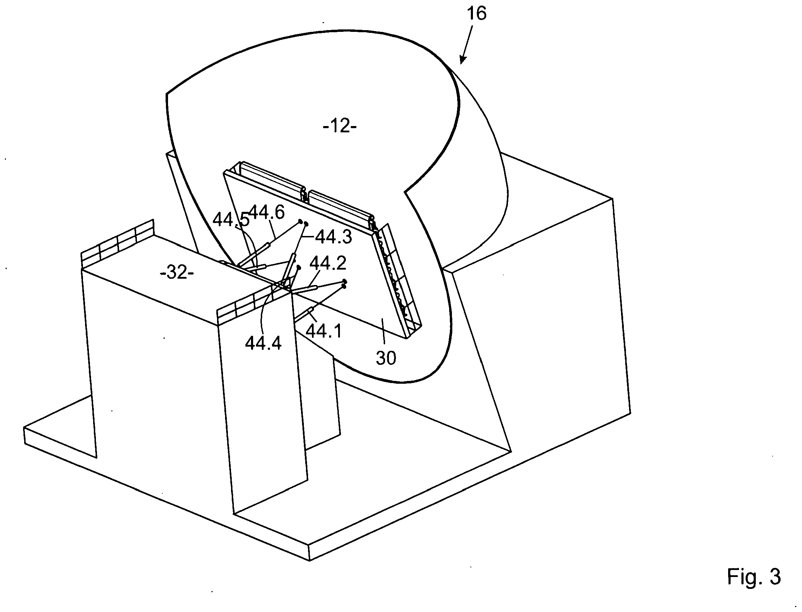

Figur 3 zeigt die Filmvorführvorrichtung 10 in einer perspektivischen Ansicht, die den Blick auf alle sechs Linearantriebe 44 zulässt. Es ist zu erkennen, dass die Filmvorführvorrichtung 10 zumindest zwei Sitzreihen aufweist, im vorliegenden Fall vier Sitzreihen, die in der in Figur 3 gezeigten zweiten Lage auf unterschiedlichen Höhen angeordnet sind.

Ein erfindungsgemäßes Verfahren wird durchgeführt, indem die Schwinge aus der ersten Lage, die in Figur 1 gezeigt ist, in eine zweite Lage, die in Figur 2 gezeigt ist, geschwenkt wird, wobei in engem zeitlichen Zusammenhang dazu ein Film vorgeführt wird und die Sitze 16 der Zuschauer 34 mittels der Bewegungsvorrichtung 18 bewegt werden. Insbesondere werden zunächst die Schwinge 20 und der Hexapodantrieb 28 betätigt. Wenn das Bodenelement 30 in der zweiten Lage ist, wird vorzugsweise ausschließlich der Hexapodantrieb 28 betätigt, da so besonders hohe Beschleunigungen möglich sind.

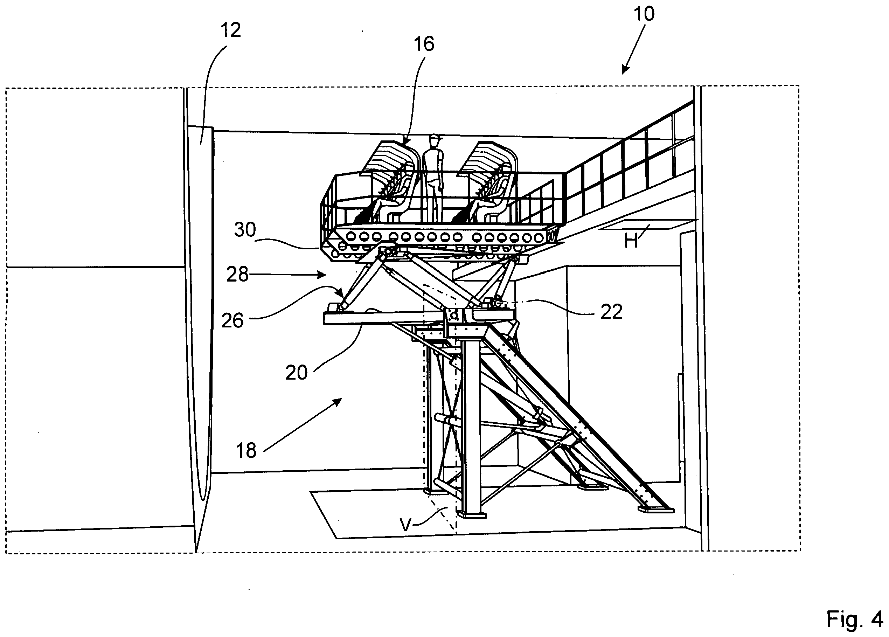

Figur 4 zeigt eine weitere Ausführungsform einer erfindungsgemäßen Filmvorführvorrichtung 10 in ihrer ersten Lage. Es ist zu erkennen, dass das Bodenelement 30 horizontal verläuft, also mit einer Horizontalen H einen Winkel von 0° einschließt. In der gezeigten ersten Lage sind die Hydraulikzylinder 26.1, 26.2, ..., 26.6 allesamt im eingefahrenen Zustand.

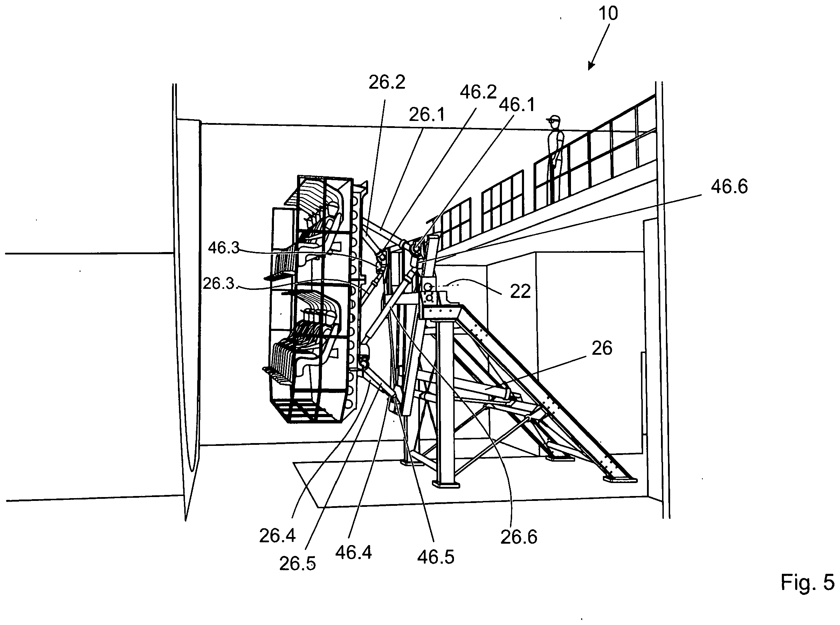

Figur 5 zeigt die Filmvorführvorrichtung 10, deren Bewegungsvorrichtung 18 in der zweiten Lage ist. Es sind die Fußpunkte 46.1, 46.2, ..., 46.6 der der Hydraulikzylinder 26.1, 26.2, ..., 26.6 zu erkennen. Vier der Fußpunkte, nämlich die Fußpunkte 46.1, 46.2, 46.3 und 46.6 sind in einem ersten Halbraum angeordnet, der durch eine vertikale Ebene V (vgl. Figur 4) gebildet ist, wobei die vertikale Ebene V durch die Drehachse des Drehgelenks 22 verläuft. Wenn die Schwinge 20 aus der in Figur 4 gezeigten Lage in die in Figur 5 gezeigte zweite Lage schwenkt, bewegen sich diese Fußpunkte nach oben. Die Fußpunkte 46.4 und 46.5 sind hingegen außerhalb dieses Halbraumes angeordnet, sie bewegen sich nach unten.

Figur 4 zeigt, dass die Schwinge dann, wenn die Bewegungsvorrichtung 18 in der ersten Lage ist, horizontal verläuft und damit mit der Horizontalen einen Winkel von 0° einschließt.

Figur 5 zeigt, dass die Schwinge in der zweiten Lage einen Winkel von mehr als 75°, im vorliegenden Fall nämlich fast 90°, einnimmt. Auch das Bodenelement 30 bildet in der zweiten Lage einen Winkel von über 75° mit der Horizontalen, im vorliegenden Fall 90°. In anderen Worten verläuft das Bodenelement in der zweiten Lage vertikal.

### Bezugszeichenliste

| | | | |
|---|---|---|---|
| | | 34 | Zuschauer/Personen |
| 10 | Filmvorführvorrichtung | 36 | Unterhaltungsgebäude |
| 12 | Projektionsfläche | 38 | Blickfeld |
| 14 | Projektor | | |
| 16 | Sitz | 40 | Haltevorrichtung |
| 18 | Bewegungsvorrichtung | 42 | Ansteuereinheit |
| | | 44 | Linearantrieb |
| 20 | Schwinge | 46 | Fußpunkt |
| 22 | Drehgelenk | | |
| 24 | Schwenkvorrichtung | A₁₆ | Sitz-Schwenkachse |
| 26 | Hydraulikzylinder | A₂₀ | Schwingen-Schwenkachse |
| 28 | Hexapodantrieb | H | Horizontale |
| | | α | Schwenkwinkel |
| 30 | Bodenelement | β | Schwingen-Schwenkwinkel |
| 32 | Zugang | | |

## Patentansprüche

1. Filmvorführvorrichtung (10) mit
(a) zumindest einer Projektionsfläche (12),
(b) zumindest einem Projektor (14), der zum Projizieren eines Films auf die Projektionsfläche (12) eingerichtet ist,
(c) einer Mehrzahl an Sitzen (16) für Zuschauer (34) und
(d) einer Bewegungsvorrichtung (18),
mittels der die Sitze (16) kollektiv in zumindest drei Freiheitsgraden bewegbar sind,
(e) wobei die Bewegungsvorrichtung (18) einen Hexapodantrieb (28) aufweist,
**dadurch gekennzeichnet, dass**
(f) die Bewegungsvorrichtung
(i) eine Schwinge (20), die um eine Schwingen-Schwenkachse (A₂₀) um einen Schwenkwinkel (α) schwenkbar gelagert ist, und
(ii) eine Schwenkvorrichtung (24), mittels der die Schwinge (20) automatisch um die Schwingen-Schwenkachse (A₂₀) schwenkbar ist, aufweist,
(iii) wobei der Hexapodantrieb (28), an der Schwinge (20) montiert ist,
(g) die Filmvorführvorrichtung (10) einen Zugang (32), auf dem Zuschauer (34) zu den Sitzen (16) gehen können, aufweist
(h) wobei die Bewegungsvorrichtung (18) ein Bodenelement (30) aufweist,
(i) wobei die Sitze am Bodenelement (30) schwenkbar befestigt sind und
(j) wobei die Bewegungsvorrichtung (18) durch Betätigen der Schwenkvorrichtung (24) aus
(i) einer ersten Lage, in der das Bodenelement (30) an den Zugang (32) angedockt ist, in
(ii) eine zweite Lage, in der das Bodenelement (30) gegenüber seiner ersten Lage um einen Schwenkwinkel (α) von zumindest 15° verschwenkt ist,
bringbar ist.

2. Filmvorführvorrichtung (10) nach Anspruch 1, **dadurch gekennzeichnet, dass**
(a) der Hexapodantrieb (28) zumindest sechs Linearantriebe (44) umfasst,
(b) wobei jeder der Linearantriebe (44)
- eine Minimallängenstellung,
- eine Maximallängenstellung und
- einen Hub hat,
(c) wobei zumindest ein Linearantrieb (44) dann, wenn die Bewegungsvorrichtung (18) in der ersten Lage ist, zumindest 75 % seines Hubs aus der Minimallängenstellung zurückgelegt hat.

3. Filmvorführvorrichtung (10) nach einem der vorstehenden Ansprüche, **dadurch gekennzeichnet, dass** die Sitze (16) Haltevorrichtungen (40) aufweisen, mittels denen eine Person (34) relativ zum Sitz (16) fixierbar ist.

4. Filmvorführvorrichtung (10) nach einem der vorstehenden Ansprüche, **dadurch gekennzeichnet, dass**
(a) die Projektionsfläche (12) gekrümmt ist und
(b) die Mehrzahl an Sitzen (16) innerhalb einer gedachten Ausgleichskugel durch die Projektionsfläche (12) angeordnet ist.

5. Filmvorführvorrichtung (10) nach einem der vorstehenden Ansprüche, **dadurch gekennzeichnet, dass** die Sitze (16) automatisch relativ zu dem Bodenelement (30) verschwenkbar sind.

6. Filmvorführvorrichtung (10) nach einem der vorstehenden Ansprüche 1 bis 5, **gekennzeichnet durch** eine Ansteuereinheit (42), die eingerichtet ist zum automatischen Durchführen eines Verfahrens mit den Schritten:
(i) Erfassen, ob für alle durch eine Person (34) belegten Sitze (16) ein Freigabesignal vorliegt, das den Zustand kodiert, dass die auf dem Sitz befindliche Person (34) relativ zum Sitz (16) fixiert ist,
(ii) nach Vorliegen des Freigabesignals Schwenken der Schwinge (20), so dass die Bewegungsvorrichtung (18) in die zweite Lage kommt, und
(iii) Vorführen eines Films und dazu synchronisiertes Bewegen der Sitze (16) der Zuschauer (34) durch Bewegen des Bodenelements (30), mittels der Bewegungsvorrichtung (18).

7. Filmvorführvorrichtung (10) nach Anspruch 6, **dadurch gekennzeichnet, dass** die Ansteuereinheit (42) eingerichtet ist zum automatischen Durchführen eines Verfahrens mit den Schritten:
(iv) Schwenken der Schwinge (20), so dass die Bewegungsvorrichtung (18) in die erste Lage kommt, und
(v) Lösen der Haltevorrichtungen (40).

8. Filmvorführvorrichtung (10) nach einem der vorstehenden Ansprüche, **dadurch gekennzeichnet, dass**
- die Schwinge (20) in einem Drehgelenk (22) gelagert ist, das um eine Drehachse drehbar ist, und dass
- die Filmvorführvorrichtung Hydraulikzylinder (26.1, 26.2, 26.3, 26.4, 26.5, 26.6) umfasst, die in jeweils einem Fußpunkt (46.1, 46.2, 46.3, 46.4, 46.5, 46.6) mit der Schwinge (20) verbunden sind,
- wobei die Fußpunkte (46.1, 46.2, 46.3, 46.4, 46.5, 46.6) so angeordnet sind, dass dann, wenn die Bewegungsvorrichtung (18) in der ersten Lage ist, zumindest zwei der Fußpunkte in einem ersten Halbraum liegen, der von einer vertikalen Ebene (V) durch die Drehachse begrenzt wird, und
zumindest zwei der Fußpunkte außerhalb des ersten Halbraums liegen.

9. Filmvorführvorrichtung (10) nach einem der Ansprüche 1 bis 8, **dadurch gekennzeichnet, dass** die Bewegungsvorrichtung (18) so ausgebildet ist, dass dann, wenn sie in ihrer ersten Lage ist, das Bodenelement (30) mit der Horizontalen (H) einen Winkel von weniger als 15° einschließt.

10. Filmvorführvorrichtung (10) nach einem der Ansprüche 1 bis 8, **dadurch gekennzeichnet, dass** die Bewegungsvorrichtung (18) so ausgebildet ist, dass dann, wenn sie in ihrer ersten Lage ist, die Schwinge (20) mit der Horizontalen (H) einen Winkel von weniger als 22,5° einschließt.

11. Verfahren zum Vorführen eines Films mittels einer Filmvorführvorrichtung (10) nach einem der Ansprüche 1-10 mit den Schritten:
(i) Schwenken der Schwinge (20), so dass die Bewegungsvorrichtung (18) in die zweite Lage kommt, und
(ii) Vorführen eines Films und dazu synchronisiertes Bewegen der Sitze (16) der Zuschauer (34) durch Bewegen des Bodenelements (30), auf dem die Sitze befestigt sind, mittels der Bewegungsvorrichtung (18).

## Claims

1. Film screening device (10) with
(a) at least one projection surface (12),
(b) at least one projector (14) that is set up to project a film onto the projection surface (12),
(c) a number of seats (16) for viewers (34) and
(d) a movement device (18),
by means of which the seats (16) can be moved collectively in at least three degrees of freedom,
(e) wherein the movement device (18) comprises a hexapod drive unit (28),
**characterised by** the fact that
(f) the movement device comprises
(i) a swing arm (20) that is arranged such that it can be swivelled about a swing-swivel axis (A₂₀) at a swivel angle (α), and
(ii) a swivel device (24), by means of which the swing arm (20) can automatically be swivelled about the swing-swivel axis (A₂₀),
(iii) wherein the hexapod drive unit (28) is attached to the swing arm (20),
(g) the film screening device (10) has an access point (32) by means of which viewers (34) can reach the seats (16),
(h) wherein the movement device (18) comprises a floor element (30),
(i) wherein the seats on the floor element (30) are attached in such a way that they can be swivelled, and
(j) wherein the movement device (18) can be moved by activating the swivel device (24) from
(i) a first position in which the floor element (30) is docked at the access point (32) into
(ii) a second position in which the floor element (30) has been swivelled by a swivel angle (α) of at least 15° relative to its first position.

2. Film screening device (10) according to claim 1, **characterised by** the fact that
(a) the hexapod drive unit (28) has at least six linear drives (44),
(b) wherein each linear drive (44) has
- a minimum length position,
- a maximum length position and
- a hub,
(c) wherein at least one linear drive (44) has moved at least 75% of its hub out of the minimal length position when the movement device (18) is in the first position.

3. Film screening device (10) according to one of the above claims, **characterised by** the fact that the seats (16) comprise holding devices (40), by means of which a person (34) can be fixed relative to the seat (16).

4. Film screening device (10) according to one of the above claims, **characterised by** the fact that
(a) the projection surface (12) is curved and
(b) the number of seats (16) is arranged within an imaginary fit sphere that goes through the projection surface (12).

5. Film screening device (10) according to one of the above claims, **characterised by** the fact that the seats (16) can be automatically swivelled relative to the floor element (30).

6. Film screening device (10) according to one of the above claims 1 to 5, **characterised by** a control unit (42) that is designed to automatically carry out a method featuring the steps:
(i) identifying whether there is a release signal present for all seats (16) occupied by a person (34), this signal providing a code for the situation in which the person (34) occupying the seat is fixed relative to the seat (16),
(ii) upon the presence of the release signal, swivelling the swing arm (20) such that the movement device (18) moves into the second position, and
(iii) screening a film and the synchronised movement of the viewers' (34) seats (16) by moving the floor element (30) by means of the movement device (18).

7. Film screening device (10) according to claim6, **characterised by** the fact that the control unit (42) is set up to automatically execute a method containing the steps:
(iv) swivelling the swing arm (20) such that the movement device (18) moves into the second position, and
(v) releasing the holding devices (40).

8. Film screening device (10) according to one of the above claims, **characterised by** the fact that
- the swing arm (20) is stored in a swivel joint (22) that can be rotated about a rotational axis, and that
- the film screening device comprises hydraulic cylinders (26.1, 26.2, 26.3, 26.4, 26.5, 26.6) which are connected to the swing arm (20) at a respective base point (46.1, 46.2, 46.3, 46.4, 46.5, 46.6),
- wherein the base points (46.1, 46.2, 46.3, 46.4, 46.5, 46.6) are arranged such that at least two of the base points lie within a first half-space when the movement device (18) is in the first position, the half-space being restricted by a vertical plane (V) through the rotational axis, and
at least two of the base points lie outside of the first half-space.

9. Film screening device (10) according to one of the claims 1 to 8, **characterised by** the fact that the movement device (18) is designed in such a way that the floor element (30) confines an angle of less than 15° with the horizontal (H) when it (the movement device) is in its first position.

10. Film screening device (10) according to one of the claims 1 to 8, **characterised by** the fact that the movement device (18) is designed in such a way that the swing arm (20) confines an angle of less than 22.5° with the horizontal (H) when the movement device is in its first position.

11. Method for screening a film by means of a film screening device (10) according to one of the claims 1-10 with the steps:
(i) swivelling the swing arm (20) such that the movement device (18) moves into the second position, and
(ii) screening a film and the synchronised movement of the viewers' (34) seats (16) by moving the floor element (30), to which the seats are fixed, by means of the movement device (18).

## Revendications

1. Dispositif de projection de film (10), comportant
(a) au moins une surface de projection (12),
(b) au moins un projecteur (14) conçu pour projeter un film sur la surface de projection (12),
(c) une pluralité de sièges (16) pour spectateurs (34), et
(d) un dispositif de déplacement (18) permettant de déplacer les sièges (16) collectivement dans au moins trois degrés de liberté,
(e) le dispositif de déplacement (18) comprenant un entraînement à hexapode (28),
**caractérisé en ce que**
(f) le dispositif de déplacement comprend
(i) une bielle (20) qui est montée mobile en basculement d'un angle de basculement (α) autour d'un axe de basculement de bielle (A₂₀), et
(ii) un dispositif de basculement (24) permettant de basculer la bielle (20) automatiquement autour de l'axe de basculement de bielle (A₂₀),
(iii) l'entraînement à hexapode (28) étant monté sur la bielle (20),
(g) le dispositif de projection de film (10) comprend un accès (32) permettant aux spectateurs (34) d'accéder aux sièges (16),
(h) le dispositif de déplacement (18) comprenant un élément formant sol (30),
(i) les sièges étant fixés de façon mobile en basculement sur l'élément formant sol (30), et
(j) par actionnement du dispositif de basculement (24), le dispositif de déplacement (18) pouvant être amené
(i) depuis une première situation dans laquelle l'élément formant sol (30) est accoudé à l'accès (32),
(ii) jusque dans une seconde situation dans laquelle l'élément formant sol (30) est basculé d'un angle de basculement (α) d'au moins 15 % par rapport à sa première situation.

2. Dispositif de projection de film (10) selon la revendication 1, **caractérisé en ce que**
(a) l'entraînement à hexapode (28) comprend au moins six entraînements linéaires (44),
(b) chacun des entraînements linéaires (44) ayant
- une position de longueur minimale,
- une position de longueur maximale, et
- une course,
(c) dans lequel, lorsque le dispositif de déplacement (18) est dans la première situation, au moins un entraînement linéaire (44) a parcouru au moins 75 % de sa course depuis la position de longueur minimale.

3. Dispositif de projection de film (10) selon l'une des revendications précédentes, **caractérisé en ce que** les sièges (16) comprennent des dispositifs de retenue (40) permettant de fixer une personne (34) par rapport au siège (16).

4. Dispositif de projection de film (10) selon l'une des revendications précédentes, **caractérisé en ce que**
(a) la surface de projection (12) est incurvée, et
(b) la pluralité de sièges (16) sont agencés à l'intérieur d'une sphère de compensation imaginaire à travers la surface de projection (12).

5. Dispositif de projection de film (10) selon l'une des revendications précédentes, **caractérisé en ce que** les sièges (16) sont mobiles en basculement automatiquement par rapport à l'élément formant sol (30).

6. Dispositif de projection de film (10) selon l'une des revendications 1 à 5, **caractérisé par** une unité de pilotage (42) qui est conçue pour mettre en oeuvre automatiquement un procédé comprenant les étapes consistant à :
(i) détecter s'il se présente un signal de libération pour tous les sièges (16) occupés par des personnes (34), signal qui code l'état selon lequel la personne (34) située sur le siège est fixée par rapport au siège (16),
(ii) une fois que le signal de libération est présent, basculer la bielle (20) de telle sorte que le dispositif de déplacement (18) vient dans la seconde situation, et
(iii) projeter le film et mouvoir en synchronisme les sièges (16) des spectateurs (34) par déplacement de l'élément formant sol (30) au moyen du dispositif de déplacement (18).

7. Dispositif de projection de film (10) selon la revendication 6, **caractérisé en ce que** l'unité de pilotage (42) est conçue pour mettre en oeuvre automatiquement un procédé comprenant les étapes consistant à :
(iv) basculer la bielle (20) de telle sorte que le dispositif de déplacement (18) vient dans la première situation, et
(v) détacher les dispositifs de retenue (40).

8. Dispositif de projection de film (10) selon l'une des revendications précédentes, **caractérisé en ce que**
- la bielle (20) est montée dans une articulation rotative (22) qui est mobile en rotation autour d'un axe de rotation, et **en ce que**
- le dispositif de projection de film comprend des cylindres hydrauliques (26.1, 26.2, 26.3, 26.4, 26.5, 26.6) qui sont reliés à la bielle (20) respectivement par un point de pied (46.1, 46.2, 46.3, 46.4, 46.5, 46.6),
- dans lequel les points de pied (46.1, 46.2, 46.3, 46.4, 46.5, 46.6) sont agencés de telle sorte que lorsque le dispositif de déplacement (18) est dans la première situation, au moins deux des points de pied se situent dans un premier demi-espace qui est limité par un plan vertical (V) passant par l'axe de rotation, et
au moins deux des points de pied se situent à l'extérieur du premier demi-espace.

9. Dispositif de projection de film (10) selon l'une des revendications 1 à 8, **caractérisé en ce que** le dispositif de déplacement (18) est réalisé de telle sorte que lorsqu'il est dans sa première situation, l'élément formant sol (30) définit un angle de moins de 15° avec l'horizontale (H).

10. Dispositif de projection de film (10) selon l'une des revendications 1 à 8, **caractérisé en ce que** le dispositif de déplacement (18) est réalisé de telle sorte que lorsqu'il est dans sa première situation, la bielle (20) définit un angle de moins de 22,5° avec l'horizontale (H).

11. Procédé de projection d'un film au moyen d'un dispositif de projection de film (10) selon l'une des revendications 1 à 10, comprenant les étapes consistant à
(i) basculer la bielle (20) de telle sorte que le dispositif de déplacement (18) vient dans la seconde situation, et
(ii) projeter un film et mouvoir en synchronisme les sièges (16) des spectateurs (34) par déplacement de l'élément formant sol (30) sur lequel les sièges sont fixés, au moyen du dispositif de déplacement (18).
